# EUROPÄISCHE PATENTSCHRIFT

(11) **EP 1 643 287 B1**
(45) Veröffentlichungstag und Bekanntmachung des Hinweises auf die Patenterteilung: **11.06.2008**
(21) Anmeldenummer: 05020544.2
(22) Anmeldetag: 21.09.2005
(51) Int. Cl.: G02B 21/24

(54) **Endlagenschaltung für Stereomikroskope mit motorisiertem Fokussiertrieb**
Limit stop switch for stereo-microscopes with motorized focusing
Interrupteur de bout de course pour stéréo-microscope avec focalisation motorisée

(30) Priorität: 01.10.2004 DE 102004048295
(43) Veröffentlichungstag der Anmeldung: 05.04.2006
(73) Patentinhaber: Carl Zeiss MicroImaging GmbH, 07745 Jena (DE)
(72) Erfinder: Kaufhold, Tobias, 07749 Jena (DE); Hein, Detlef, 37083 Göttingen (DE); Fechti, Jürgen, 37079 Göttingen (DE)
(74) Vertreter: Scholze, Humbert

(56) Entgegenhaltungen:
- DE-A1- 4 112 010
- US-A- 5 672 816
- US-A1- 2004 090 670
- US-B1- 6 307 672

## Beschreibung

Gegenstand dieser Erfindung ist eine kundenseitig einstellbare Endlagenabschaltung für motorisierte Fokussiertriebe an Stereomikroskopen.

Die verwendeten Antriebe für die motorisierte Fokussierbewegung an Stereomikroskopen müssen Lasten in der Größenordnung von einigen Kilogramm heben können und sind deshalb entsprechend kräftig dimensioniert. Aufgrund der vielfältigen Einsatzmöglichkeiten eines Stereomikroskops ist es seitens der Hersteller nicht möglich feste Anschläge so vorzusehen, dass eine Quetsch- bzw. Zerstörungsgefahr für alle Anwendungsfälle auszuschließen ist. Deshalb werden kundenseitig einstellbare mechanische Anschläge vorgesehen, die abhängig von der Applikation vom Kunden eingestellt werden können. Ausschließlich elektronisch einstellbare Endlagen sind nicht sicher genug und erfordern einen erhöhten Aufwand: nach jedem Einschalten muss die aktuelle Position relativ zu den eingestellten Endlagen bekannt sein, hierfür müsste eine Anfahrt auf eine Referenzposition durchgeführt oder ein absolutes Meßsystem verwendet werden.

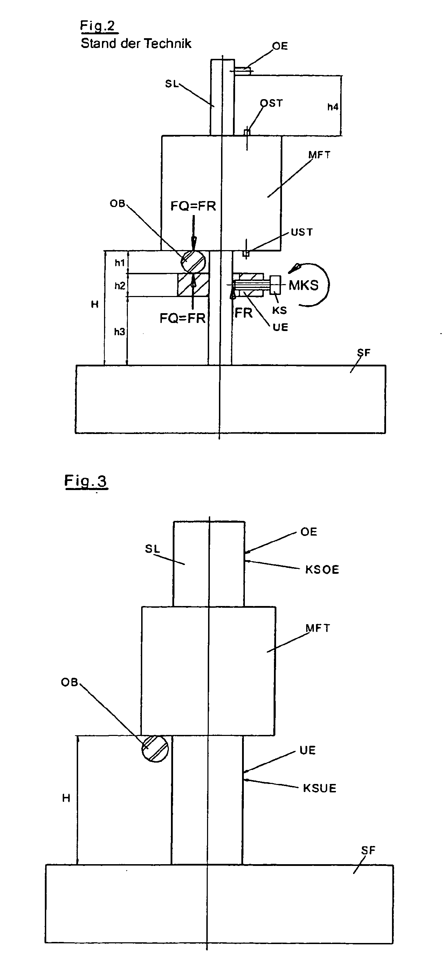

Von der Firma Leica ist ein motorisch betriebenes Fokussiersystem für Stereomikroskope bekannt, das als einstellbare Endanschläge verstellbare Klemmen (Best.-Nr. 10445654) vorsieht, welche die Führungssäule fast vollständig umschließen. Dieses Prinzip ist als Stand der Technik in Fig. 2 dargestellt. Die Darstellung in Fig. 2 beschränkt sich nur auf die zur Beschreibung wichtigen relevanten Bauteile, deshalb sind Zoomkörper, Tubus sowie das Prinzip der senkrechten Führung des motorisierten Fokussiertriebes MFT auf der Säule SL hier nicht dargestellt.
Ausgelöst wird die Endlagenbetätigung über je einen Stößel OST bzw. UST für die obere und die untere Endlage, die zugeordneten Schaltelemente befinden sich im Inneren des motorisierten Fokussiertriebes. Standardmäßig ist nur eine verstellbare Klemme UE für die Einstellung der unteren Endlage vorgesehen, diese sehr großflächige Klemme UE wird durch eine leicht zugängliche Klemmschraube KS gegen die Säule SL festgeklemmt. Prinzipiell kann die Klemme UE auch oberhalb des motorisierten Fokussiertriebes MFT zur Einstellung der oberen Endlage an der Säule SL festgeklemmt werden. Dies ist jedoch nicht unbedingt nötig, da zur Einstellung der oberen Endlage ein Endanschlag OE an der Säule SL fest montiert ist.

Beim Arbeiten mit dieser Lösung besteht trotz der Endlagenabschaltung eine erhebliche Quetsch- bzw. Zerstörungsgefahr. Denn zwischen den großflächig ausgeführten Klemmen und dem Triebkasten des Fokussiertriebes ist ein relativ großer, durch die Endlagenabschaltung ungeschützter Bereich vorhanden. Es besteht nicht nur die Gefahr der Quetschung von Körperteilen, es können dort auch Lichtleiter oder Kabel eingeklemmt werden, wenn diese nicht sorgfältig genug verlegt werden. Außerdem verleitet diese Lösung aufgrund der störenden sperrigen Klemmen und der leichten Lösbarkeit zum schnellen Entfernen der Klemmen. Hierdurch ist eine wirksame Endlagenabschaltung entsprechend schnell nicht mehr gegeben.
Die o.g. Konstruktion ist aufgrund der aufwendig gestalteten Klemme UE und der notwendigen Stößel OST und UST relativ kostenintensiv.

Eine ähnliche Lösung ist auch in der DE 41 12 010 A1 beschrieben.

In Fig. 2 ist erkennbar, dass der freie Abstand H durch die Klemme UE mit der Höhe h2, die mit der Unterseite in der Höhe h3 vom Stativfuß SF an die Säule SL geklemmt wird, direkt über der Klemme auf den Abstand h1 verringert wird. In diesem Bereich besteht aufgrund des unnötig kleinen Zwischenraumes trotz einer großen Höhe H eine erhöhte Gefahr der Quetschung eines Körperteils (z.B. eines Fingers) bzw. eines Objektes OB. Mit steigendem Anzugsdrehmoment MKS steigt auch die Reibkraft FR; diese Kraft ist identisch mit der Quetschkraft FQ.

Der Erfindung liegt die Aufgabe zugrunde eine Endlagenabschaltung für motorisierte Fokussiertriebe an Stereomikroskopen zu entwickeln, welche eine verbesserte Sicherheit bei reduziertem Kostenaufwand aufweist.

Die Aufgabe wird erfindungsgemäß durch die Merkmale des unabhängigen Anspruchs gelöst, vorteilhafte Ausgestaltungen sind in den abhängigen Ansprüchen dargestellt.
Der besondere Vorteil der Erfindung liegt darin, dass die Anschläge verdeckt ausgeführt sind und damit den Bediener nicht beim Hantieren mit dem zu untersuchenden Material oder Zusatzeinrichtungen des Mikroskops wie spezieller Beleuchtungseinrichtungen behindern.
Auch die Gefahr, Gegenstände zwischen dem Mikroskop und den Anschlägen einzuklemmen, wird verhindert.

Die Erfindung wird im folgenden an Hand der Figuren näher erläutert.
Es zeigen:
Fig. 1 ein Stereomikroskop nach dem Stand der Technik
Fig. 2 eine Endlagenschalteranordnung nach dem Stand der Technik
Fig. 3 Übersichtsdarstellung einer bevorzugten Ausführungsform der Erfindung
Fig. 4 Detaildarstellung einer bevorzugte Ausführungsform der Erfindung

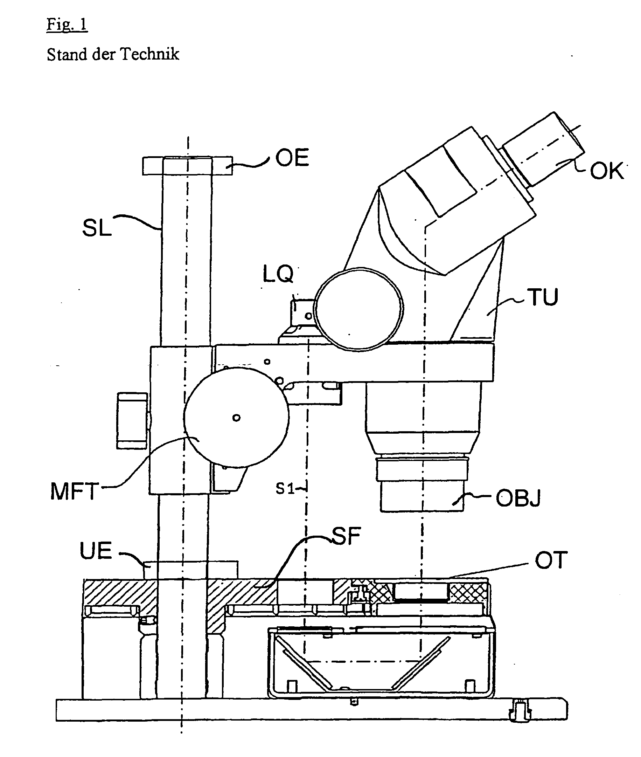

In der Fig. 1 ist ein Stereomikroskop mit einem motorischen Fokustrieb MFT nach dem Stand der Technik dargestellt. An einer Säule SL, welche am Stativfuß SF befestigt ist, ist das aus Tubus TU, Objektiv OBJ und Okularen OK bestehende Mikroskop angebracht. Das von einer Lichtquelle LQ kommende Licht wird über den Strahlengang S1 auf den Objektträger OT gerichtet, auf dem das hier nicht dargestellte zu untersuchende Material aufgelegt oder befestigt wird. Da diese Objekte sehr unterschiedliche Höhen aufweisen können ist es notwendig das Stereomikroskop an der Säule SL in die für die Beobachtung optimale Höhe einzustellen, was mit Hilfe des motorischen Fokustriebes MFT über hier nicht dargestellte Steuermittel erfolgt. Damit beim Abwärtsfahren das Objektiv OBJ und das zu untersuchende Material nicht kollidieren ist an der Säule SL ein unterer Endanschlag UE angebracht. Analog weist die Säule einen oberen Endanschlag OE auf um zu verhindern, dass das Mikroskop zu weit nach oben bewegt wird und im Extremfall die Führung durch die Säule SL verlieren kann.
In Fig. 2 ist eine durch den Nutzer anpassbare Endlagenschaltung nach dem Stand der Technik angegeben, bei der der Nutzer den unteren Anschlag UE selbst einstellen kann. Fig. 2 wurde in der Kritik des Standes der Technik bereits ausführlich erläutert.
Fig. 3 zeigt die Vorteile der Erfindung, unterer und oberer Anschlag UE und OE sind in einer Nut der Säule SL verdeckt angebracht, damit ist gesichert, dass sich im Gegensatz zu Fig. 2 keine störenden Bauteile mehr unterhalb oder oberhalb des motorisierten Fokussiertriebes MFT befinden, d.h. der freie Arbeitsabstand H zwischen der Unterseite des motorisierten Fokussiertriebes MFT und dem Stativfuß SF wird bei anfokussiertem Objekt nicht unnötig eingeengt.

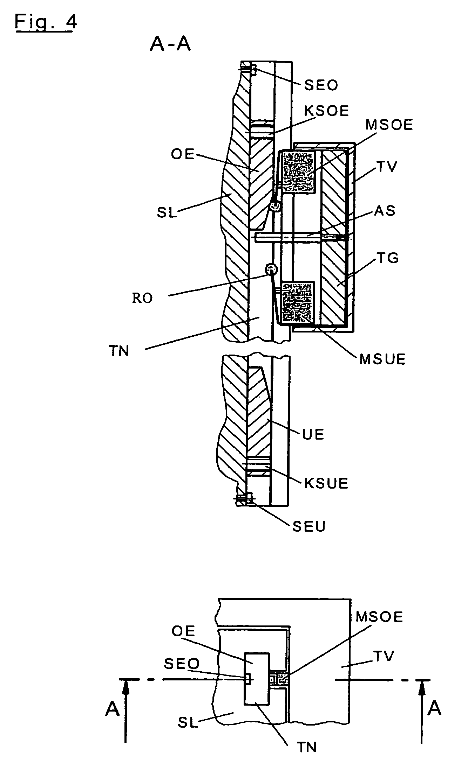

Fig. 4 zeigt die Detailansicht der erfindungsgemäßen Konstruktion: in einer T-Nut TN in der Säule SL sind die Endanschläge OE und UE verschiebbar angeordnet. In der gewünschten Position können die Endanschläge OE und UE mit den Klemmschrauben KSOE und KSUE über ein mitgeliefertes Standardwerkzeug festgeklemmt werden. Zwei nur mit speziellem Werkzeug montierbare Schrauben (z.B. Torx-Schrauben o.ä.) SEO und SEU befinden sich an den Enden der T-Nut TN und verhindern ein kundenseitiges Entfernen der Endanschläge. Dies ist auch nicht nötig, da die Endanschläge OE und UE nicht mehr die Handhabung stören und ein ausreichender Verstellweg für die Endlagen jederzeit gegeben ist. Das mitgelieferte Standardwerkzeug wird vorteilhafterweise in der Nähe des Einsatzortes gelagert (z.B. von oben in die Säule SL eingelassen).

Durch die Anschlagschraube AS wird verhindert, dass der gelöste obere Endanschlag in das Triebkastengehäuse TG hineinrutscht, somit bleibt die Klemmschraube KSOE immer gut zugänglich. Um das Triebkastengehäuse TG ist eine Triebkastenverkleidung TV angeordnet.

Nachfolgend wird der Abschaltvorgang bei der Bewegung des motorischen Fokussiertriebes MFT auf die untere Endlagenposition beschrieben, analog dazu funktioniert auch der Abschaltvorgang bei der Bewegung auf die obere Endlagenposition: Bei der Bewegung nach unten bewegt sich mit dem motorischen Fokussiertrieb MFT auch der im Triebkastengehäuse TG montierte Mikroschalter MSUE für die untere Endlagenabschaltung in diese Richtung. Bei der Annäherung an die untere Endlagenposition läuft die Rolle RO des Mikroschalters MSUE zunächst auf die Schräge des unteren Endanschlages UE auf. Mit zunehmender Positionsänderung nach unten wird die Rolle RO des Mikroschalters MSUE immer weiter in Richtung des Mikroschalters gedrückt, bis schließlich der Schaltvorgang für die untere Endlagenabschaltung ausgelöst wird. Durch die Schräge am unteren Endanschlag UE gibt es einen gewissen "Fangbereich" für die Rolle RO des Mikroschalters MSUE, d.h. der Schaltvorgang funktioniert auch noch dann zuverlässig wenn die Ausgangsposition der Rolle RO von der Idealposition abweicht. Die Art der Ansteuerung des Fokusmotors ist nicht Gegenstand dieser Erfindung und dem Fachmann geläufig.

Für die Endlagenschaltung werden Mikroschalter eingesetzt, die vorzugsweise als Öffner ausgeführt sind. Dies hat den Vorteil, dass der motorische Fokussiertrieb immer nur dann motorisch bewegt werden kann, wenn der Schaltstromkreis nicht unterbrochen ist. Somit ist eine motorische Bewegung auch bei einem Kabelbruch oder Ausfall eines Mikroschalters nicht mehr möglich. Dadurch stellen solche Fehler kein Sicherheitsrisiko mehr dar, erst nach der Fehlerreparatur ist ein Betrieb des motorischen Fokussiertriebes wieder möglich.

Prinzipiell ist es auch möglich beide Endlagenabschaltungen mit nur einem einzigen Mikroschalter zu realisieren. Hierzu muss die Drehrichtung des Antriebsmotors abgefragt und gespeichert werden. Während der Bewegung nach oben kann der dann mögliche Schaltvorgang des Mikroschalters nur durch den oberen Endanschlag OE ausgelöst worden sein. Analog dazu kann der Schaltvorgang des Mikroschalters während der Bewegung nach unten nur durch den unteren Endanschlag UE ausgelöst werden.

Das Einstellen der Endanschläge wird durch einen Justiermodus erleichtert: wird bei stillstehendem Antriebsmotor ein Endlagenschalter betätigt, so wird z.B. während der Betätigung permanent ein Piepton ausgegeben. Dadurch kann die Schaltschwelle leichter ermittelt werden. Wird ein Endlagenschalter während des normalen Betriebs bei laufendem Motor betätigt, so werden abweichend vom Justiermodus nur kurzzeitig akustische Signale ausgegeben, wobei die Signale für die obere und die untere Endlage auch unterschiedlich sein können.

Nach einem Schaltvorgang kann die Information über die Endlage an eine elektronische Steuereinrichtung (welche z.B. über eine Recheneinheit und eine Anzeigevorrichtung verfügt) ausgegeben werden, welche diese Information dann auch zur Auslösung von Makros oder anderen Aktionen nutzen kann. Damit kann z.B. nach der Bewegung in die obere Endlagenposition die Information in der eingestellten Sprache (z.B. schriftlich über ein Display oder per Sprachausgabe) ausgegeben werden, dass der eingestellte Verfahrbereich für die weitere Bewegung nicht ausreichend ist. Die Makros sind vom Benutzer frei veränderbar und erleichtern die Einbindung in eine automatisierte Umgebung. Z.B. lassen sich auch externe Geräte nach einer Anfahrt in eine Endlage über ein Makro ansteuern.

Die Erfindung ist nicht an das dargestellte bevorzugte Ausführungsbeispiel gebunden, fachmännische Weiterentwicklungen und Abwandlungen führen nicht zu einem Verlassen des durch die Patentansprüche beschriebenen Schutzumfangs.

## Patentansprüche

1. Stereomikroskop mit motorisiertem Fokussiertrieb(MFT), wobei das Stereomikroskop an einer Tragsäule (SL) motorisch beweglich befestigt ist
wobei die Tragsäule (SL) mindestes eine Nut (TN) mit mindestens einem versenkten Endanschlag (UE, OE) aufweist, wobei der Endanschlag (UE, OE) in der Nut verschiebbar in verschiedenen Positionen befestigbar ist und wobei ein mit dem motorisierten Fokustrieb (MFT) verbundenes Schaltelement (MSUE, MSOE) mit dem Endanschlag (UE, OE) eine Endlagenschaltung bildet.

2. Stereomikroskop mit Endlagenschaltung nach Anspruch 1, wobei ein oberer und ein unterer Endanschlag in einer gemeinsamen T-Nut befestigbar sind.

3. Stereomikroskop mit Endlagenschaltung nach Anspruch 1 oder 2, wobei das Entfernen der Endanschläge durch eine an der Tragsäule angebrachte Sicherung verhindert wird.

4. Stereomikroskop mit Endlagenschaltung nach Anspruch 1, 2 oder 3, wobei eine Information über das Erreichen einer Endlagenposition an eine Steuereinheit übergeben wird, welches diese Information zum Start von Makros oder zur Information an einen Benutzer verwenden kann.

5. Stereomikroskop mit Endlagenschaltung nach einem der vorstehenden Ansprüche, wobei mindestens ein Schaltelement als Öffner ausgeführt ist.

6. Stereomikroskop mit Endlagenschaltung nach einem der vorstehenden Ansprüche, wobei mindestens ein Schaltelement als Mikroschalter ausgeführt ist.

7. Stereomikroskop mit Endlagenschaltung nach einem der vorstehenden Ansprüche wobei bei der Betätigung eines Schaltelementes ein vorzugsweise akustisches Signal ausgegeben wird.

## Claims

1. Stereomicroscope having a motorised focussing drive (MFT), wherein the stereomicroscope is attached to a support column (SL) so as to be able to move in a motorised manner,
wherein the support column (SL) comprises at least one groove (TN) having at least one countersunk end stop (UE, OE), wherein the end stop (UE, OE) can be attached in different positions so as to be displaceable in the groove, and wherein a switching element (MSUE, MSOE) connected to the motorised focus drive (MFT) forms, together with the end stop (UE, OE), a limit switch.

2. Stereomicroscope having a limit switch as claimed in Claim 1, wherein an upper and a lower end stop can be attached in a common T-groove.

3. Stereomicroscope having a limit switch as claimed in Claim 1 or 2, wherein removal of the end stops is prevented by a locking device attached to the support column.

4. Stereomicroscope having a limit switch as claimed in Claim 1, 2 or 3, wherein information regarding whether a limit position has been reached is transmitted to a control unit which can use this information to start macros or to inform a user.

5. Stereomicroscope having a limit switch as claimed in any one of the preceding Claims, wherein at least one switching element is designed as a break contact.

6. Stereomicroscope having a limit switch as claimed in any one of the preceding Claims, wherein at least one switching element is designed as a micro-switch.

7. Stereomicroscope having a limit switch as claimed in any one of the preceding Claims, wherein upon actuation of a switching element, a signal - preferably acoustic - is emitted.

## Revendications

1. Stéréo-microscope avec focalisation motorisée (MFT), où le stéréo-microscope est fixé d'une manière mobile par moteur à une colonne de support (SL),
où la colonne de support (SL) présente au moins une rainure (TN) avec au moins une butée d'extrémité noyée (UE, OE), où la butée d'extrémité (UE, OE) peut être fixée d'une manière déplaçable dans la rainure dans différentes positions, et où un élément de commutation (MSUE, MSOE) relié à la focalisation motorisée (MFT) forme avec la butée d'extrémité (UE, OE) un interrupteur de fin de course.

2. Stéréo-microscope avec interrupteur de fin de course selon la revendication 1, où une butée d'extrémité supérieure et une butée d'extrémité inférieure peuvent être fixées dans une rainure en T commune.

3. Stéréo-microscope avec interrupteur de fin de course selon la revendication 1 ou 2, où l'enlèvement des butées d'extrémité est empêché par une sécurité montée sur la colonne de support.

4. Stéréo-microscope avec interrupteur de fin de course selon la revendication 1, 2 ou 3, où une information concernant l'atteinte d'une position de fin de course est transmise à une unité de commande qui peut utiliser cette information pour démarrer des macros ou pour l'information à un utilisateur.

5. Stéréo-microscope avec interrupteur de fin de course selon l'une des revendications précédentes, où au moins un élément de commutation est réalisé comme contact de rupture.

6. Stéréo-microscope avec interrupteur de fin de course selon l'une des revendications précédentes, où au moins un élément de commutation est réalisé comme micro-commutateur.

7. Stéréo-microscope avec interrupteur de fin de course selon l'une des revendications précédentes, où lors de l'actionnement d'un élément de commutation, un signal de préférence acoustique est émis.
